# EUROPÄISCHE PATENTSCHRIFT

(11) **EP 1 116 357 B1**
(45) Veröffentlichungstag und Bekanntmachung des Hinweises auf die Patenterteilung: **23.02.2005**
(21) Anmeldenummer: 00944007.4
(22) Anmeldetag: 06.07.2000
(51) Int. Cl.: H04L 9/30, H04L 9/08

(54) **VERFAHREN ZUR SICHEREN VERTEILTEN GENERIERUNG EINES CHIFFRIERSCHLÜSSELS**
METHOD FOR GENERATING A CIPHER KEY IN A SECURE AND DISTRIBUTED MANNER
PROCEDE DE GENERATION SURE REPARTIE D'UNE CLE DE CODAGE

(30) Priorität: 27.07.1999 DE 19935286
(43) Veröffentlichungstag der Anmeldung: 18.07.2001
(73) Patentinhaber: Deutsche Telekom AG, 53113 Bonn (DE)
(72) Erfinder: SCHWENK, Jörg, D-91239 Henfenfeld (DE)
(86) Internationale Anmeldenummer: PCT/EP2000/006388
(87) Internationale Veröffentlichungsnummer: WO 2001/008349

(56) Entgegenhaltungen:
- EP-A- 0 534 420
- GENNARO R ET AL: "Two-Phase Cryptographic Key Recovery System" COMPUTERS & SECURITY. INTERNATIONAL JOURNAL DEVOTED TO THE STUDY OF TECHNICAL AND FINANCIAL ASPECTS OF COMPUTER SECURITY,NL,ELSEVIER SCIENCE PUBLISHERS. AMSTERDAM, Bd. 16, Nr. 6, 1997, Seiten 481-506, XP004094892 ISSN: 0167-4048

## Beschreibung

Die Erfindung betrifft ein Verfahren zur sicheren verteilten Generierung eines Chiffrierschlüssels für ein Kryptographieverfahren, wobei der Chiffrierschlüssel sowie ein öffentlicher Schlüssel mittels deterministischer Verfahren aus einer großen Zufallszahl (Seed) erzeugt werden.

Ein solches Vorgehen ist generell bekannt, wie beispielsweise das Dokument GENNARO R ET AL: "Two-Phase Cryptographic Key Recovery System" COMPUTERS & SECURITY. INTERNATIONAL JOURNAL DEVOTED TO THE STUDY OF TECHNICAL AND FINANCIAL ASPECTS OF COMPUTER SECURITY, NL, ELSEVIER SCIENCE PUBLISHERS. AMSTERDAM, Bd. 16, Nr. 6, 1997, Seiten 481-506, XP004094892 ISSN: 0167-4048 belegt.

Zur Sicherung von Kommunikationsdaten und gespeicherten Daten wird immer häufiger die kryptographische Technik der Verschlüsselung eingesetzt. Dabei werden die Daten unter der Kontrolle eines kryptographischen Schlüssels chiffriert. Die Daten können mit demselben Schlüssel auch wieder dechiffriert werden. Marktfähige Produkte und Softwarebibliotheken dazu stehen zur Verfügung.

Meist wird zur Verschlüsselung ein sogenanntes hybrides Verfahren eingesetzt. Bei diesem Verfahren wird die eigentliche Nachricht mit einem zufällig gewählten symmetrischen Schlüssel (Session-Key) und einem vorgegebenen symmetrischen Verschlüsselungsverfahren (z.B. DES, IDEA) verschlüsselt. Der Session Key wird dann wiederum jeweils mit dem öffentlichen Schlüssel des Empfängers (es sind mehrere Empfänger möglich) und einem vorgegebenen asymmetrischen oder Public-Key-Verfahren (z.B. RSA, ElGamal) verschlüsselt. Für jeden Empfänger wird der so verschlüsselte Session-Key der verschlüsselten Nachricht beigefügt. Eine Beschreibung dieser Vorgehensweise und der verwendeten Algorithmen findet man z.B. in William Stallings: "Cryptography and Network Security: Principles and Practice", Prentice Hall, Upper Saddle River, New Jersey, 1998.

Um eine Nachricht zu entschlüsseln, muß der Empfänger zunächst mit seinem, zu seinem öffentlichen Schlüssel gehörenden, privaten Schlüssel und einem vorgegebenen Public-Key-Algorithmus den Session-Key entschlüsseln und dann mit diesem Session-Key die Nachricht entschlüsseln.

Neben der Verschlüsselung von Nachrichten werden kryptographische Verfahren auch zur Verschlüsselung gespeicherter Daten, z.B. auf dem eigenen Personalcomputer, eingesetzt. Auch hier setzt man in der Regel ein hybrides Verfahren ein, bei dem der Nutzer die Daten zunächst mit einem zufällig gewählten symmetrischen Schlüssel (Session-Key) und einem vorgegebenen symmetrischen Verschlüsselungsverfahren (z.B. DES, IDEA) verschlüsselt. Der Session Key wird dann wiederum mit dem öffentlichen Schlüssel des Nutzers und einem vorgegebenen asymmetrischen oder Public-Key-Verfahren (z.B. RSA, ElGamal) verschlüsselt.

Der Benutzer entschlüsselt zunächst mit seinem, zu seinem öffentlichen Schlüssel gehörenden, privaten Schlüssel und einem vorgegebenen Public-Key-Algorithmus den Session-Key und dann mit diesem Session-Key die gespeicherten Daten.

Der jeweils private Schlüssel des Benutzers bzw. des Empfängers ist im folgenden mit dem Begriff Chiffrierschlüssel bezeichnet.

Der Chiffrierschlüssel wird entweder auf einer Chipkarte gespeichert, wobei der Zugriff auf die Chipkarte durch eine nur dem Benutzer bekannte Geheimzahl (PIN) geschützt ist, oder er wird auf einem anderen Speichermedium (z.B. Festplatte oder Diskette) gespeichert, wobei er durch ein möglichst langes Paßwort geschützt wird.

Der Chiffrierschlüssel kann verloren gehen. Wenn beispielsweise das Speichermedium zerstört wurde, auf dem er sich befand, oder wenn der Nutzer die PIN oder das Paßwort vergessen hat, mit dem der Chiffrierschlüssel gesichert war, ist ein Zugriff auf chiffrierte Daten damit nicht mehr möglich.

Um bei einem Verlust des Chiffrierschlüssels chiffrierte Daten wieder zugänglich machen zu können, sind Mechanismen notwendig, um den Chiffrierschlüssel auf sichere Weise regenerieren zu können. Zu diesem Zweck wird heute in der Regel der Chiffrierschlüssel an einer zentralen Vertrauensstelle erzeugt und sicher aufbewahrt. Die Erzeugung des Chiffrierschlüssels erfolgt in der Regel dadurch, daß zunächst mit einem statistisch guten Zufallsprozeß eine große Zufallszahl (Seed) erzeugt wird. Aus dieser Zufallszahl wird dann mit Hilfe eines deterministischen Verfahrens das Schlüsselpaar öffentlicher Schlüssel/privater Schlüssel erzeugt. Der Seed wird anschließend gelöscht. Der Nutzer erhält dann im Bedarfsfalle eine Kopie seines Chiffrierschlüssels zur Benutzung zugestellt.

Der Nutzer hat dabei keinen Einfluß auf die Erzeugung und die weitere Behandlung seines Chiffrierschlüssels beim Erzeuger. Es ist aufwendig, die Kopie des Chiffrierschlüssels sicher zum Nutzer zu transportieren. Als Transportmedium kann beispielsweise die oben erwähnte Chipkarte dienen, die dem Nutzer zugesendet wird.

Aufgabe der vorliegenden Erfindung ist es, ein Verfahren der eingangs genannten Art anzugeben, welches die oben angeführten Probleme löst.

Dem zur Lösung der Aufgabe hier vorgeschlagenen Verfahren liegt der Gedanke zugrunde, daß der aufwendige gesicherte Transport des Chiffrierschlüssels zum Nutzer entfallen kann, wenn erfindungsgemäß der Seed S nutzerseitig durch Hinzuziehung von nur dem Nutzer bekannten Größen u und einem, von der Vertrauensstelle vorab übermittelten, öffentlichen Schlüssel V erzeugt wird und daß eine zur Generierung des Seeds geeignete Generierinformation G, aus welcher der Seed von der Vertrauensstelle unter Hinzuziehung nur ihr bekannter Informationen v deterministisch ableitbar ist, nutzerseitig erzeugt und der Vertrauensstelle zur parallelen Erstellung des Seeds übermittelt wird.

Auf diese Weise kann der Seed sowohl bei dem Benutzer, als auch bei der Vertrauensstelle parallel erstellt werden, ohne daß Dritten eine Rekonstruktion des Seeds aus eventuell abgehörten Informationen ermöglicht wird. Aus dem Seed sind durch deterministische und allseits bekannte Verfahren der private Chiffrierschlüssel des Nutzers und dessen öffentlicher Schlüssel U ableitbar, so daß der Nutzer seine Schlüssel aus dem Seed selbst erstellen und ein Transport des Chiffrierschlüssels entfallen kann.

Eine erste Ausgestaltung der Erfindung ist dadurch verwirklicht, daß eine mathematische Abbildung (Schlüsselvereinbarungsabbildung) k: k(x,y)=z vorgesehen ist, für die gilt:
a) k(k(u,v),w) = k(k(u,w),v) für alle u,v,w,
b) aus der Kenntnis von u und k(u,v) kann in der Praxis nicht auf v geschlossen werden,
c) aus der Kenntnis von u, k(u,v) und k(u,w) kann in der Praxis nicht k(k(u,w),v) geschlossen werden,
daß ein der Vertrauensstelle bekannter öffentlicher Parameter g und ein seitens der Vertrauensstelle vorhandener geheimer Schlüssel v zu dem öffentlichen Schlüssel V=k(g,v) der Vertrauensstelle verknüpft sind,
daß der öffentliche Schlüssel V und eine nutzerseitig gewählte Zufallszahl u nutzerseitig zu dem Seed S=k(V,u) verknüpft werden,
daß aus dem Seed S nutzerseitig durch das vorgegebene deterministische Verfahren ein Schlüsselpaar aus Chiffrierschlüssel C und öffentlichem Nutzerschlüssel U abgeleitet wird,
daß zur Ermöglichung der Erstellung des Seeds S eine Generierinformation G=k(g,u) nutzerseitig erzeugt und an die Vertrauensstelle übermittelt wird und
daß der Seed S auf Seiten der Vertrauensstelle durch S=k(G,v) parallel erzeugt wird.

Die Zufallszahl u und der Seed S sollen nach der Erzeugung der Generierinformation G seitens des Nutzers zur Sicherheit wieder vernichtet werden. Die Erzeugung der Generierinformation G erfolgt nutzerseitig unter abhörsicheren Bedingungen, beispielsweise innerhalb des nutzerseitigen Computerterminals, so daß weder die Zufallszahl u noch der Seed S an die Öffentlichkeit gelangen kann. Die Generierinformation G allein ist ohne Kenntnis des geheimen Schlüssels v zur Erstellung des Seeds ungeeignet und muß daher nicht geheim gehalten werden.

Die Generierinformation G kann darum auf beliebigem abhörbarem Wege (E-Mail, WWW, ftp, ...) zu der Vertrauensstelle gesendet werden.

Aufgrund der Eigenschaft der verwendeten Abbildung k gilt k(G,v) = k(k(g,u),v) = k(k(g,v),u) = k(V,u) = S, was tatsächlich wieder dem ursprünglichen Seed S entspricht. Da der Vertrauensstelle das deterministische Verfahren, v und p bekannt sind, kann der Chiffrierschlüssel C mit Hilfe der Generierinformation G sehr leicht von der Vertrauensstelle auch ohne Kenntnis der Zufallszahl u wieder hergestellt werden. Der bei der Vertrauensstelle parallel generierte Chiffrierschlüssel C kann dort abhörsicher aufbewahrt werden.

Beispiele für geeignete Schlüsselvereinbarungsabbildungen k sind bekannt aus der Zahlentheorie. Beispielsweise kann vorgesehen sein, daß die Schlüsselvereinbarungsabbildung k eine diskrete Exponentialfunktion modulo einer großen Primzahl p: k(x,y) := x^{y} modulo p ist und daß der öffentliche Parameter g ein Element eines mathematischen Körpers GF(p) von großer multiplikativer Ordnung ist oder, daß die Schlüsselvereinbarungsabbildung k die Multiplikation auf einer elliptischen Kurve ist. Die Größenordnung der verwendeten Zahlen ist in der Praxis so zu wählen, daß es auch unter Aufbietung modemer technischer Mittel nicht möglich ist, den Wert y aus den Werten x und k(x,y) zu errechnen, was unter Voraussetzung heutiger Dechiffriertechnik bei Größenordnungen der verwendeten Primzahlen zwischen 500 und 1000 Bit gewährleistet ist.

Eine Beschreibung derartiger Funktionen findet man in William Stallings: "Cryptography and Network Security: Principles and Practice", Prentice Hall, Upper Saddle River, New Jersey, 1998. Die vorliegende Erfindung benutzt das Prinzip des Diffie-Hellman-Schlüsselaustauschs, der ebenfalls in dem genannten Werk beschrieben wird. Bei dem erfindungsgemäßen Verfahren wird eine Vertrauensstelle vorausgesetzt, die gegebenenfalls den Chiffrierschlüssel C mit Hilfe der Regenerierinformation R wieder herstellen kann.

Bei einer Weiterbildung des erfindungsgemäßen Verfahrens ist vorgesehen, daß die Vertrauensstelle für jeden Benutzer einen spezifischen geheimen Schlüssel vu wählt, daß auf Seiten der Vertrauensstelle statt des allgemeinen öffentlichen Schlüssels V ein benutzerspezifischer Schlüssel Vu=k(g,vu) erzeugt und an den Nutzer zur Erzeugung seines Schlüsselpaares C und U übermittelt wird. Der benutzerspezifische geheime Schlüssel vu kann, wie auch der allgemeine geheime Schlüssel v, eine statistisch gute Zufallszahl sein.

Bei einer nächsten Weiterbildung des erfindungsgemäßen Verfahrens ist zur Gewährleistung der Funktionssicherheit des Verfahrens vorgesehen, daß die Vertrauensstelle dem Nutzer die zur Erstellung des Seeds S notwendigen Informationen Vu erst übermittelt, wenn sie die Generierinformation G erhalten hat. Damit ist gewährleistet, daß die Vertrauensstelle die Generierinformation erhält.

In einer weiteren Ausprägung des Verfahren ist vorgesehen, daß es mehrere Vertrauensstellen gibt, die die Schlüsselvereinbarungsabbildung k und den öffentlichen Parameter g benutzen. Der Nutzer wählt eine oder mehrere dieser Vertrauensstellen aus und führt mit jeder das erfindungsgemäße Verfahren unter Gewinnung eines jeweils anderen Teils Sv des Seeds S durch. Zur Generierung des Chiffrierschlüssels C werden die von den Vertrauensstellen errechneten Teilwerte Sv des Seeds S nutzerseitig zu dem gesamten Seed S verknüpft. Zur parallelen Erstellung des gesamten Seeds S auf Seiten der Vertrauensstellen müssen die ausgewählten Vertrauensstellen kooperieren. Diese können nur gemeinsam den Seed S und damit den Chiffrierschlüssel C generieren. Diese Vorgehensweise kann den Mißbrauch des Chiffrierschlüssels C durch eine einzelne Vertrauensstelle oder das Bekanntwerden geheimer Informationen durch eventuelle Fehlfunktion einer Vertrauensstelle verhindern.

In einer weiteren Ausprägung des Verfahrens ist vorgesehen, daß die verschiedenen Vertrauensstellen verschiedene Funktionen kv und verschiedene öffentliche Parameter gv benutzen. In diesem Fall muß der Nutzer für jede Vertrauensstelle das erfindungsgemäße Verfahren durchführen, und für jede Vertrauensstelle muß eine andere Generierinformation Gv erzeugt werden.

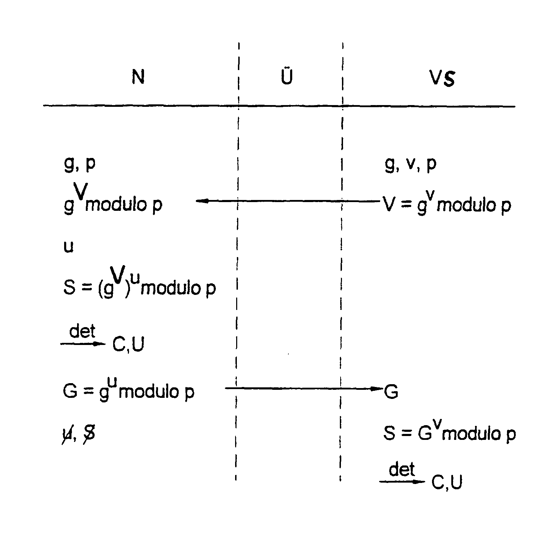

Die Erfindung läßt zahlreiche Ausführungsformen zu. Eine davon ist in der Zeichnung dargestellt und nachfolgend beschrieben.

Die Zeichnung zeigt ein Diagramm der Vorgänge, die zur parallelen Erzeugung eines rekonstruierbaren nutzerspezifischen Seeds S und eines Schlüsselpaares aus Chiffrierschlüssel C und öffentlichem Nutzerschlüssel U nach dem erfindungsgemäßen Verfahren notwendig sind. In der mit N bezeichneten Spalte sind von oben nach unten die nacheinander auftretenden nutzerseitigen Daten aufgeführt. Ü bezeichnet die Datenübertragungsstrecke zu einer Vertrauensstelle VS.Die Vertrauensstelle VS und der Nutzer N verfügen über den öffentlichen Parameter g und die große Primzahl p. Von der Vertrauensstelle VS wird der öffentliche Schlüssel V = g^{v} modulo p erzeugt und auf einfachem Wege zum Nutzer N übertragen. Der Nutzer erzeugt daraufhin mit einer von ihm gewählten Zufallszahl u einen Seed S und eine Generierinformation G und löscht die Zufallszahl u aus Sicherheitsgründen wieder. Die Generierinformation G wird an die Vertrauensstelle V übermittelt. Aus dem Seed S werden durch Anwendung eines vorgegebenen und dem Nutzer und der Vertrauensstelle gleichermaßen bekannten deterministischen Verfahrens ein öffentlicher Nutzerschlüssel U sowie ein privater, ebenfalls nutzerspezifischer Chiffrierschlüssel C erzeugt. Der Chiffrierschlüssel C dient hier zum Entschlüsseln von Nachrichten oder Daten des Nutzers.

## Patentansprüche

1. Verfahren zur sicheren verteilten Generierung eines Chiffrierschlüssels für ein Kryptographieverfahren, wobei der Chiffrierschlüssel sowie ein öffentlicher Schlüssel mittels deterministischer Verfahren aus einer großen Zufallszahl, im folgenden als Seed bezeichnet, erzeugt werden, **dadurch gekennzeichnet, daß** der Seed S nutzerseitig durch Hinzuziehung von nur dem Nutzer bekannten Größen u und einem von der Vertrauensstelle vorab übermittelten, öffentlichen Schlüssel V erzeugt wird und daß eine zur Generierung des Seeds geeignete Generierinformation G, aus welcher der Seed von der Vertrauensstelle unter Hinzuziehung nur ihr bekannter Informationen v deterministisch ableitbar ist, nutzerseitig erzeugt und der Vertrauensstelle zur parallelen Erstellung des Seeds übermittelt wird.

2. Verfahren nach Anspruch 1, **dadurch gekennzeichnet, daß** eine mathematische Abbildung, auch als Schlüsselvereinbarungsabbildung bezeichnet, k: k(x,y)=z vorgesehen ist, für die gilt:
a) k(k(u,v),w) = k(k(u,w),v) für alle u,v,w,
b) aus der Kenntnis von u und k(u,v) kann in der Praxis nicht auf v geschlossen werden,
c) aus der Kenntnis von u, k(u,v) und k(u,w) kann in der Praxis nicht k(k(u,w),v) geschlossen werden,
daß ein der Vertrauensstelle bekannter öffentlicher Parameter g und ein seitens der Vertrauensstelle vorhandener geheimer Schlüssel v zu dem öffentlichen Schlüssel V=k(g,v) der Vertrauensstelle verknüpft sind,
daß der öffentliche Schlüsel V und eine nutzerseitig gewählte Zufallszahl u nutzerseitig zu dem Seed S=k(V,u) verknüpft werden,
daß aus dem Seed S nutzerseitig durch das vorgegebene deterministische Verfahren ein Schlüsselpaar aus Chiffrierschlüssel C und öffentlichem Nutzerschlüssel U abgeleitet wird,
daß zur Ermöglichung der Erstellung des Seeds S eine Generierinformation G=k(g,u) nutzerseitig erzeugt und an die Vertrauensstelle übermittelt wird und
daß der Seed S auf Seiten der Vertrauensstelle durch S=k(G,v) parallel erzeugt wird.

3. Verfahren nach einem der vorhergehenden Ansprüche, **dadurch gekennzeichnet, daß** die Schlüsselvereinbarungsabbildung k eine diskrete Exponentialfunktion modulo einer großen Primzahl p: k(x,y) := x^{y} modulo p ist und daß der öffentliche Parameter g ein Element eines mathematischen Körpers GF(p) von großer multiplikativer Ordnung ist.

4. Verfahren nach einem der Ansprüche 1 oder 2, **dadurch gekennzeichnet, daß** die Schlüsselvereinbarungsabbildung k die Multiplikation auf einer elliptischen Kurve ist.

5. Verfahren nach einem der vorhergehenden Ansprüche, **dadurch gekennzeichnet, daß** die Vertrauensstelle für jeden Benutzer einen spezifischen geheimen Schlüssel vu wählt, daß auf Seiten der Vertrauensstelle statt des allgemeinen öffentlichen Schlüssels V ein benutzerspezifischer Schlüssel Vu=k(g,vu) erzeugt und an den Nutzer zur Erzeugung seines Schlüsselpaares C und U übermittelt wird.

6. Verfahren nach Anspruch 5, **dadurch gekennzeichnet, daß** die Vertrauensstelle dem Nutzer die zur Erstellung des Seeds S notwendigen Informationen Vu erst übermittelt, wenn sie die Generierinformation G erhalten hat.

7. Verfahren nach einem der vorhergehenden Ansprüche, **dadurch gekennzeichnet, daß** es mehrere Vertrauensstellen gibt, die die Schlüssetvereinbarungsabbildung k und den öffentlichen Parameter g benutzen, der Nutzer eine oder mehrere dieser Vertrauensstellen auswählt und mit jeder das erfindungsgemäße Verfahren unter Gewinnung eines jeweils anderen Teils Sv des Seeds S durch führt, wobei zur Generierung des Chiffrierschlüssels C die von den Vertrauensstellen errechneten Teilwerte Sv des Seeds S nutzerseitig zu dem gesamten Seed S verknüpft werden.

8. Verfahren nach Anspruch 7, **dadurch gekennzeichnet, daß** die verschiedenen Vertrauensstellen verschiedene Funktionen kv und verschiedene öffentliche Parameter gv benutzen.

## Claims

1. Method for the secure distributed generation of a cipher key for a cryptography method, the cipher key as well as a public key being generated by means of deterministic methods from a large random number, hereinafter referred to as the seed, **characterized in that** the seed S is generated at the user end using quantities u known only to the user and a public key V communicated beforehand by the trusted third party and **in that** an item of generating information G suitable for generation of the seed - from which item of generating information G the seed can be deterministically derived by the trusted third party using information v known only to it - is generated at the user end and is communicated to the trusted third party for concurrent creation of the seed.

2. Method according to claim 1, **characterized in that** a mathematical mapping, referred to also as key agreement mapping, k: k(x,y)=z is provided, for which there applies the following:
a) k(k(u,v),w) = k(k(u,w),v) for all u,v,w;
b) knowledge of u and k(u,v) cannot in practice be used to deduce v;
c) knowledge of u, k(u,v) and k(u,w) cannot in practice be used to deduce k(k(u,w),v);
**in that** a public parameter g known to the trusted third party and a secret key v available at the trusted third party end are combined to form the public key V=k(g,v) of the trusted third party,
**in that** the public key V and a user-selected random number u are combined at the user end to form the seed S=k(V,u),
**in that** a key pair of cipher key C and public user key U is derived at the user end from the seed S through the specified deterministic method,
**in that**, in order to enable the creation of the seed S, an item of generating information G=k(g,u) is generated at the user end and is communicated to the trusted third party and **in that** the seed S is concurrently generated at the trusted third party end through S=k(G,v).

3. Method according to any one of the preceding claims, **characterized in that** the key agreement mapping k is a discrete exponential function modulo a large prime number p: k(x,y) := x^{y} modulo p and **in that** the public parameter g is an element of a mathematical body GF(p) of high multiplicative order.

4. Method according to any one of claim 1 or 2, **characterized in that** the key agreement mapping k is the multiplication on an elliptical curve.

5. Method according to any one of the preceding claims, **characterized in that** the trusted third party selects a specific secret key vu for each user, **in that**, instead of the general public key V, a user-specific key Vu=k(g,vu) is generated at the trusted third party end and is communicated to the user for generation of the user's key pair C and U.

6. Method according to claim 5, **characterized in that** the trusted third party communicates to the user the information Vu required for creation of the seed S only after the trusted third party has received the item of generating information G.

7. Method according to any one of the preceding claims, **characterized in that** there is a plurality of trusted third parties using the key mapping agreement k and the public parameter g, wherein the user selects one or more of said trusted third parties and carries out the method according to the invention with each trusted third party, gaining in each case a different portion Sv of the seed S, wherein, in order to generate the cipher key C, the portions Sv of the seed S calculated by the trusted third parties are combined at the user end to form the total seed S.

8. Method according to claim 7, **characterized in that** the different trusted third parties use different functions kv and different public parameters gv.

## Revendications

1. Procédé de génération sécurisée et étalée d'un code de chiffrage pour un procédé de cryptographie, dans lequel le code de chiffrage et un code public sont produits au moyen de procédés déterministes à partir d'un grand nombre aléatoire, désigné ci-après par 'Seed', **caractérisé en ce que** le Seed S - du côté utilisateur - est généré à l'aide de valeurs u uniquement connues par l'utilisateur et d'un code public V transmis préalablement par le poste de confiance et **en ce qu'**une information de génération G apte à générer le Seed et de laquelle le Seed peut être déduit de manière déterministe par le poste de confiance avec recours à des données v uniquement en sa connaissance est générée du côté de l'utilisateur et transmise au poste de confiance pour édition parallèle du Seed.

2. Procédé selon la revendication 1, **caractérisé en ce qu'**une application mathématique - désignée également comme application de convention de code - k: k(x,y)=z, est prévue à laquelle les affirmations suivantes s'appliquent:
a) k(k(u,v),w) = k(k(u,w),v) quels que soient u,v et w,
b) v ne peut, dans la pratique, pas être déduit de u et k(u,v),
c) k(k(u,w),v) ne peut, dans la pratique, pas être déduit de u, k(u,v) et k(u,w)
**en ce qu'**un paramètre public g connu par le poste de confiance et un code secret v dont dispose le poste de confiance sont mis en relation avec le code public V=k(g,v) du poste de confiance,
**en ce que** le code public V et un nombre aléatoire u sélectionné par l'utilisateur sont mis en relation avec le Seed S=k(V,u) du côté de l'utilisateur,
**en ce que**, du côté utilisateur, une paire de codes est déduite du code de chiffrage C et du code d'utilisateur public U à partir du Seed S, par le procédé déterministe préétabli,
**en ce qu'**une information de génération G=k(g,u) est produite du côté utilisateur pour rendre possible la génération du Seed S et sa transmission au poste de confiance, et
**en ce que** le Seed S est émis parallèlement du côté du poste de confiance par S=k(G,v).

3. Procédé selon l'une des revendications précédentes, **caractérisé en ce que** l'application de convention de code k est une fonction exponentielle modulo discrète d'un grand nombre premier p: k(x,y) :=x^{y} modulo p et **en ce que** le paramètre public g est un élément d'un corps mathématique GF(p) d'ordre multiplicatif élevé.

4. Procédé selon l'une des revendications 1 ou 2, **caractérisé en ce que** l'application de convention de code k est la multiplication sur une courbe elliptique.

5. Procédé selon l'une des revendications précédentes, **caractérisé en ce que** le poste de confiance sélectionne un code secret vu spécifique pour chaque utilisateur et que - du côté du poste de confiance - un code Vu=k(g,vu) spécifique à l'utilisateur est généré au lieu du code public général V qui est transmis à l'utilisateur pour la création de sa paire de codes C et U.

6. Procédé selon la revendication 5, **caractérisé en ce que** le poste de confiance ne transmet à l'utilisateur les informations Vu nécessaires à la création du Seed S qu'après obtention des informations de génération G.

7. Procédé selon l'une des revendications précédentes, **caractérisé en ce qu'**il existe plusieurs postes de confiance utilisant à la fois l'application de convention de code k et le paramètre public g, **en ce que** l'utilisateur sélectionne un ou plusieurs de ces postes de confiance et réalise avec chacun d'eux le procédé conforme à la présente invention en obtenant chaque fois une autre partie Sv du Seed S, les valeurs partielles Sv du Seed S, calculées par les postes de confiance, étant mises en relation côté utilisateur avec l'ensemble du Seed S pour la génération intégrale du code chiffré C.

8. Procédé selon la revendication 7, **caractérisé en ce que** les différents postes de confiance utilisent différentes fonctions kv et différents paramètres publics gv.
